Europäisches Patentamt

European Patent Office

Office européen des brevets

(11) Publication number: **0 254 555 B1**

# EUROPEAN PATENT SPECIFICATION

(45) Date of publication of patent specification: **12.06.91**     (51) Int. Cl.⁵: **H02G 7/08, H01R 4/50**

(21) Application number: **87306493.5**

(22) Date of filing: **22.07.87**

(54) Wedge clamps.

(30) Priority: **22.07.86 GB 8617911**

(43) Date of publication of application:
**27.01.88 Bulletin 88/04**

(45) Publication of the grant of the patent:
**12.06.91 Bulletin 91/24**

(84) Designated Contracting States:
**DE ES FR IT**

(56) References cited:
**AT-A- 353 880**
**DE-A- 3 447 986**
**DE-B- 1 210 468**

(73) Proprietor: **Pavilion Engineering Company Limited**
**Unit 7 Hendy Industrial Estate**
**Potardulais Swansea SA4 1XP West Glamorgan(GB)**

(72) Inventor: **Kindness, William Brian**
**Bryn Banal Fach Bethel Road**
**Pontyberem Dyfed SA15 5NH(GB)**

(74) Representative: **Austin, Hedley William et al**
**Urquhart-Dykes & Lord Alexandra House 1 Alexandra Road**
**Swansea West Glamorgan SA1 5ED(GB)**

## Description

The present invention is concerned with wedge clamps for anchoring an electrical or structural (i.e. mechanical) cable of indefinite length.

A wedge clamp is a known type of clamp for stranded overhead cables, which offers a number of advantages over more conventional compression anchor clamps. In general, no special tools are required for installation and the clamp may be assembled onto continuous unjointed conductors, with subsequent sag adjustments being made by slackening the clamp and repositioning it along the conductor to counteract primary creep. This latter feature eliminates the need for special sag adjusters.

Known wedge clamps, such as those described in DE-A-1210468, have a pair of cable engaging clamp members having substantially semicircular cable clamping faces, the clamp members having longitudinally tapering outer surfaces and being enclosed within a wedging body structure which acts to wedge the clamp members and cause the latter, in turn, to clamp the cable when longitudinal relative movement takes place between the outer surfaces and the wedging body structure. The operation of the clamp members may be described as "single-plane", because they apply clamping pressure in a single plane, along the plane of the junction between the cable and the clamp members. Such wedge clamps are self-tightening, because an increase in the line tension of the cable causes an increase in the wedging action between internal surfaces of the wedging body structure and external surfaces of the clamp member, and thereby an increase in the clamping pressure.

Such wedge clamps have two major disadvantages, as follows:

(i) the conversion of radial forces into two single-plane reactions at the cable surface results in highly concentrated stresses in the clamp, necessitating the use of a support structure of unduly high strength, and also causes high stress to be imposed on the cable with consequent danger of cable damage; and

(ii) the self-tightening feature, whilst simplifying installation, does not provide an absolute factor of safety. The clamping force on the cable, which is proportional to the applied line tension, may only just be enough to prevent the cable from slipping, and the safety factor is conditional upon subsequent operational performance. If the internal surfaces of the wedging body structure seize to the outer surfaces of the clamp members (after years of exposure to corrosive elements, for example), the self-tightening feature may not operate, resulting possibly even in cable pull-out.

According to the present invention, there is provided a wedge clamp, which comprises:

(a) at least three segmental clamp members each having a substantially arcuate cable-gripping face, said clamp members being such that they can be arranged around and in contact with substantially the entire circumference of a cable, said clamp members each having an outer surface which tapers longitudinally thereof with a predetermined taper angle; and

(b) a wedging body structure having tapering inner surfaces each tapering longitudinally with a taper angle substantially equal to the above-mentioned predetermined angle, the wedging body structure comprising a plurality of wedging elements which can interlock with one another around the clamp members so as to provide a wedging action between the clamp member outer surfaces and the wedging element inner surfaces when longitudinal relative movement takes place between the surfaces, the latter surfaces being provided with respective complementary longitudinal grooves and projections such that the body structure can be formed by sliding interlocked engagement of the grooves and projections.

The wedge clamp according to the invention can provide substantially improved contact with the cable strands and a more uniform stress distribution in an associated support structure and in the cable.

The number of clamp members is, as indicated, at least three; four is particularly preferred for some sizes of cable, although for large diameter cables, a greater number of segmental clamp members may be used. The clamp members are all preferably substantially identical, and arranged symmetrically around the cable.

The wedging elements are such that they can be assembled together over a longitudinal cable; they may, for example, be bolted together, or pivotally connected longitudinally thereof and clamped together along the free edges thereof.

In accordance with a preferred embodiment of the invention, means is provided for drawing the respective tapered surfaces of the clamp members and the wedging body structure into engagement before a cable is tensioned and gripped by the clamp members. Such drawing means typically comprises a plurality of longitudinally acting draw bolts arranged to secure the clamp members to the wedging body structure.

Typically, each such draw bolt passes through an aperture in a flange secured to at least one of the clamp members and a blind bore in the wedging body structure, or vice versa. When the draw bolts pass through an aperture in such a flange, it is particularly preferred to provide a free or captive nut, or a threaded aperture in the flange, such that the draw bolts can be secured to the clamping members before the wedging body structure is assembled thereto. This further provides a means for enabling the wedging body structure to be disengaged without complete dismantlement of the wedge clamp.

Alternatively, the drawing means may be an externally applied, purpose designed tool for engagement with the outer periphery of the wedging body structure. The use of such drawing means (such as a set of draw bolts or a separate tool) avoids relying completely upon subsequent engagement of the respective tapered surfaces, and therefore provides an "absolute" factor of safety.

An exemplary embodiment of the present invention will now be described with reference to the accompanying drawings, in which:

Figure 1 is a perspective, exploded view of an exemplary wedge clamp according to the invention; and

Figure 2 is a cross-section of the assembled clamp of Figure 1.

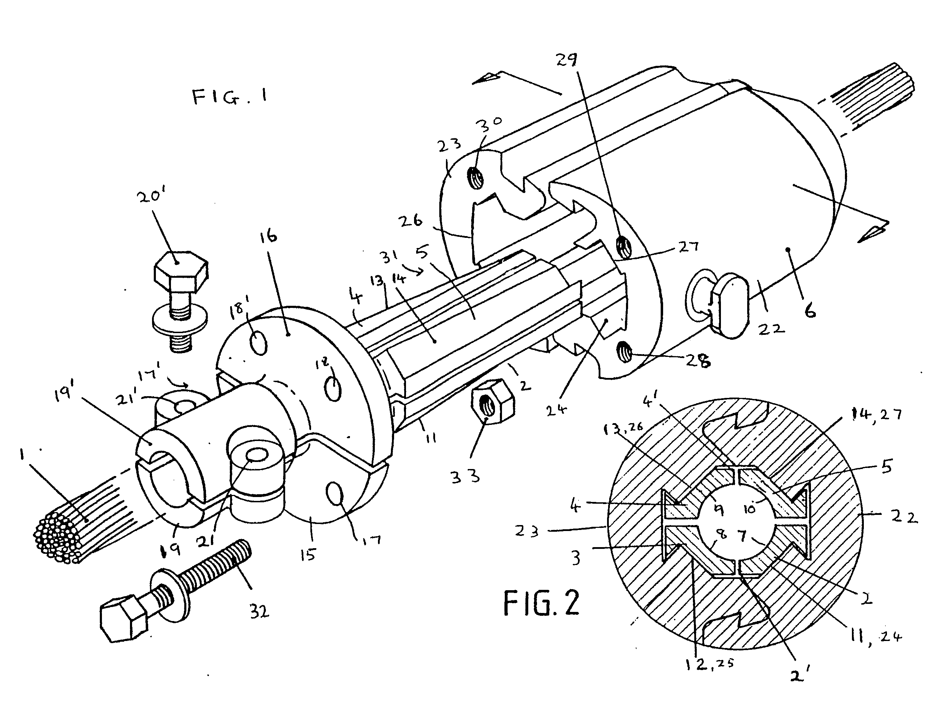

Referring to Figure 1, there is shown a wedge clamp for a cable 1 which comprises four clamp members 2,3,4,5 (Figure 2) and an outer wedging body structure 6.

Each clamp member has an arcuate internal cable-gripping surface 7,8,9,10 and an outer longitudinal tapered surface 11,12,13,14 comprising grooves and projections. The clamp members are in two separable pairs 2,3 and 4,5; each pair is integrally connected at one end to a flange 15,16, respectively.

Each pair 2,3 and 4,5 is connected together, but separated by a longitudinal slit 2' and 4', respectively. When the two pairs are assembled over the cable 1, the four cable-gripping surfaces 7,8,9,10 are equispaced about the cable axis.

Clamp members 2,3,4,5 are ranged symmetrically around the cable 1. Each flange has a pair of apertures 17,17' and 18,18', and a longitudinal sleeve 19,19'. The latter sleeves 19,19' are secured together by screws 20' passing through apertures 21,21'.

The outer wedging body structure comprises a pair of wedging elements 22,23 each having internal surfaces 24,25,26,27 which taper at substantially the same angle as surfaces 11,12,13,14 and have grooves and projections complementary thereto. Wedging element 22 has a pair of threaded bores 28,29, while wedging element 23 has a pair of threaded bores 30,31.

The wedging elements are interlocked with one another around the clamp members. Bore 28 is then aligned with aperture 17, to receive draw bolt 32; bore 29 and aperture 18, bore 30 and aperture 18', and bore 31 and aperture 17' are similarly aligned. Flanges 15 and 16 can thereby be secured to respective wedging elements 22,23.

When the wedge clamp is assembled, each draw bolt is tightened a little in turn, to draw the internal surfaces 24,25,26,27 into engagement with respective complementary surfaces 11,12,13,14. Such engagement causes inward radial forces on the cable 1, which provides the required grip. It is not necessary for the cable contacting surfaces to be serrated or irregular; indeed it is preferred that the surfaces should be totally smooth in order to ensure that there is no danger of damage to the external surface of the cable. The magnitude of the gripping force on the cable is controlled by the final tightening torque on the draw bolts.

Between flange 15 and wedging element 22 is disposed a pair of nuts 33 (only one of which is shown for purposes of clarity); a further pair of nuts (not shown) is disposed between flange 16 and wedging element 23.

The provision of such nuts enables the draw bolts to be captive to the flanges 15,16 for ease of installation.

In addition the outer wedging structure may be subsequently disengaged from the clamp members without complete dismantlement of the wedge clamps.

## Claims

1. A wedge clamp for anchoring a stranded overhead cable of indefinite length, which comprises:

(a) segmental clamp members (2-5) each having a substantially arcuate cable-gripping face (7-10), said clamp members being such that they can be arranged around and in contact with substantially the entire circumference of a cable (1), said clamp members each having an outer surface (11-14) which tapers longitudinally thereof with a predetermined taper angle; and

(b) a wedging body structure (6) having tapering inner surfaces (24-27) each tapering longitudinally thereof with a taper angle substantially equal to said predetermined angle, said wedging body structure comprising a plurality of wedging elements (22-23) which can interlock with one another around said clamp members so as to provide a wedging action between said clamp members outer surface (11-14) and said wedging element inner surfaces (24-27) when longitudinal relative movement takes place between said surfaces, characterised in that said surfaces (11-14, 24-27) are provided with respective complementary longitudinal grooves and projections such that the body structure can be formed by sliding interlocked engagement of said grooves and projections, further characterised in that the number of said segmental clamp members is at least three.

2. A wedge clamp according to claim 1, wherein the number of clamp members is four.

3. A wedge clamp according to either of claims 1 and 2, wherein the clamp members are substantially identical and shaped to be arranged symmetrically around the cable.

4. A wedge clamp according to any of claims 1 to 3, in which the cable engaging surfaces of the clamp members are smooth.

5. A wedge clamp according to any of claims 1 to 4, which is further provided with means for drawing the respective tapered surfaces of the clamp members and the wedging body structure into engagement before a cable is tensioned and gripped by the clamp members.

6. A wedge clamp according to claim 5, in which said drawing means comprises a plurality of longitudinally acting draw bolts (32) arranged to secure the clamp members to the wedging body structure.

7. A wedge clamp according to claim 6, in which each said draw bolt (32) passes through an aperture (17,18) in a flange (16) provided on at least one of the clamp members and a blind bore (28,29) in the wedging structure, or through an aperture in a flange on the wedging body structure and a corresponding blind bore in the clamp member.

8. A wedge clamp according to claim 7, wherein a free or captive nut (33), or a threaded aperture in the flange, is provided such that the draw bolts can be secured to the clamping members before the wedging body structure is assembled thereto.

**Revendications**

1. Pince à coincement destiné à l'ancrage d'un câble aérien multibrins de longueur indéterminée, comportant

   a) des coins (2-5) en forme de segments ayant chacun une face de coincement (7-10) courbe pour le serrage du câble, lesdits coins étant tels qu'ils peuvent être disposés autour et en contact avec substantiellement la périphérie externe entière d'un câble (1), lesdits coins ayant en outre une surface externe (11-14) qui a une forme longitudinale conique avec un angle de conicité prédéterminé ; et

   b) une structure formant corps de coincement (6) ayant des surfaces intérieures coniques (24-27), chacune de ces dernières ayant une pente longitudinale faisant un angle sensiblement de même valeur que ledit angle de conicité prédéterminé, ladite structure comportant une pluralité d'éléments de coincement (22, 23) pouvant s'interverrouiller les uns avec les autres autour desdits coins, de manière à produire une action de coincement entre lesdites surfaces externes (11-14) desdits doins et lesdites surfaces intérieures (24-27) desdits éléments de coincement lorsqu'un déplacement longitudinal relatif se produit entre lesdites surfaces, caractérisée en ce que lesdites surfaces (11-14, 24-27) sont respectivement pourvues de gorges et de saillies longitudinales complémentaires telles que la structure formant corps peut être réalisée par mise en prise par glissement et par verrouillage réciproques des gorges et saillies correspondantes, et caractérisée en outre en ce que lesdits coins sont au moins au nombre de trois.

2. Pince à coincement selon la revendication 1, caractérisée en ce que le nombre de coins est de quatre.

3. Pince à coincement selon l'une quelconque des revendications 1 et 2, caractérisée en ce que les coins sont substantiellement identiques et ont une forme permettant leur disposition symétrique autour du câble.

4. Pince à coincement selon l'une quelconque des revendications 1 à 3, caractérisée en ce que les surfaces des coins qui sont en contact avec le câble sont lisses.

5. Pince à coincement selon l'une quelconque des revendications 1 à 4, caractérisée en ce qu'elle comprend en outre des moyens de traction pour engager l'une sur l'autre les surfaces coniques respectives des coins et de la structure formant corps de coincement avant qu'un câble ne soit tendu et agrippé par lesdits coins.

6. Pince à coincement selon la revendication 5, caractérisée en ce que lesdits moyens de traction sont constitués par une pluralité de vis de traction (32) agissant longitudinalement et prévues pour assembler les coins avec la structure formant le corps de coincement.

7.  Pince à coincement selon la revendication 6, caractérisée en ce que chacune des vis de traction (32) traverse soit une ouverture (17, 18) d'un flasque (16) prévu sur au moins l'un des coins et un trou borgne (28, 29) prévu dans la structure de coincement, soit une ouverture du flasque de la structure formant corps de coincement et un trou borgne correspondant du coin.

8.  Pince à coincement selon la revendication 7, caractérisé en ce qu'un écrou (33) libre ou prisonnier, ou bien un trou taraudé dans le flasque est prévu de manière que les vis de traction puissent être rendues solidaires des coins avant que la structure formant le corps de coincement ne soit assemblée avec ces derniers.

**Ansprüche**

1.  Keilklemme zum Abspannen eines verseilten Freileitungskabels unbestimmter Länge, bestehend aus:

    (a) segmentförmigen Klemmteilen, die jeweils gewölbte Kabel-Einspannflächen (7 - 10) aufweisen, und so um das Kabel (1) herum angeordnet werden können, daß sie im wesentlichen an dessen gesamten Umfang anliegen, wobei jedes Klemmteil eine sich unter einem vorgegebenen Kegelwinkel längsverjüngende Außenfläche (11 - 14) besitzt; und
    (b) einem Verkeilkorpus mit sich unter einem Kegelwinkel, der im wesentlichen gleich dem besagten vorgegebenen Kegelwinkel ist, längsverjüngenden Innenflächen (24 - 27), wobei der Verkeilkorpus aus mehreren Verkeilelementen (22 - 23) besteht, die so um die Klemmteile herum miteinander verriegelbar sind, daß zwischen den Außenflächen (11 - 14) der Klemmteile und den Innenflächen (24 - 27) der Verkeilelemente eine Verkeilwirkung hervorgerufen wird, wenn zwischen diesen Flächen eine relative Längsbewegung stattfindet, dadurch gekennzeichnet, daß die Flächen (11 - 14, 24 - 27) derart mit jeweilig komplementären Längsnuten und Längsvorsprüngen versehen sind, daß der Korpus durch gleitendes, verzahntes Ineinandergreifen der Nuten und Vorsprünge gebildet werden kann, ferner gekennzeichnet dadurch, daß die Anzahl der segmentförmigen Klemmteile wenigstens drei ist.

2.  Keilklemme nach Anspruch 1, wobei die Anzahl der Klemmteile vier ist.

3.  Keilklemme nach jedem der Ansprüche 1 und 2, wobei die Klemmteile im wesentlichen identisch und so geformt sind, daß sie symmetrisch um das Kabel herum anordenbar sind.

4.  Keilklemme nach einem der Ansprüche 1 - 3, wobei die am Kabel anliegenden Flächen der Klemmteile glatt sind.

5.  Keilklemme nach einem der Ansprüche 1 - 4, die ferner mit Ziehmitteln versehen ist, um die jeweilig verjüngten Flächen der Klemmteile und des Verkeilkorpus miteinander in Eingriff zu ziehen, bevor das Kabel zugbeansprucht und durch die Klemmteile eingeklemmt wird.

6.  Keilklemme nach Anpruch 5, wobei die Ziehmittel zum Festspannen der Klemmteile an den Verkeilkorpus aus mehreren, längswirkenden Spannbolzen (32) bestehen.

7.  Keilklemme nach Anspruch 6, wobei jeder der Spannbolzen (32) durch eine Öffnung (17, 18) in einem, wenigstens an einem der Klemmteile vorgesehenen Flansch (16) in eine Sackbohrung (27, 28) im Verkeilkorpus führt oder durch eine Öffnung in einem Flansch am Verkeilkorpus in eine entsprechende Sackbohrung im Klemmteil führt.

8.  Keilklemme nach Anspruch 7, wobei eine freie oder unverlierbare Mutter (33) oder eine mit einem Gewinde versehene Öffnung im Flansch vorgesehen ist, um die Spannbolzen an den Klemmteilen zu sichern, bevor der Verkeilkorpus daran anmontiert wird.

FIG. 1

FIG. 2